(19) **Europäisches Patentamt**
**European Patent Office**
**Office européen des brevets**

(11) **EP 2 958 042 A1**

(12) **EUROPEAN PATENT APPLICATION**

(43) Date of publication:
**23.12.2015 Bulletin 2015/52**

(51) Int Cl.:
***G06F 21/36*** *(2013.01)*

(21) Application number: **14305941.8**

(22) Date of filing: **18.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **INRIA - Institut National de Recherche en**
**Informatique et en Automatique**
**78150 Le Chesnay (FR)**

(72) Inventors:
- **Castelluccia, Claude**
  **38240 MEYLAN (FR)**
- **Dürmuth, Markus**
  **20099 HAMBURG (DE)**
- **Imamoglu, Fatma**
  **BERKELEY, CA 94705 (US)**
- **Golla, Maximilian**
  **97265 HETTSTADT (DE)**

(74) Representative: **Cabinet Netter**
**36, avenue Hoche**
**75008 Paris (FR)**

(54) **Method for authenticating a user, associated system and computer program**

(57) Method for authenticating a user comprising the following steps:
- in a training phase, presenting a user with a plurality of images called primed images drawn randomly from an image database (6);
- in an authentication phase, presenting said user with a plurality of degraded versions of at least a subset of said primed images and with a plurality of degraded versions of non primed images extracted from a memory;
- receiving from said user respective identifications of said presented degraded primed and non-primed images;
- determining a global score based upon said received identifications; and
- authenticating said user based upon the determined global score.

FIG.2

**Description**

The present invention generally relates to security applications for authenticating users in communication services. In general, an authentication step is required when a user, e.g. through a telecommunication device, requests access to a protected resource.

Current forms of user authentication are generally based on passwords or some secret that the user has to remember. Depending on the system the authentication procedure can have different complexities. These so called knowledge-based authentication systems suffer from the competing requirements of security and usability, which are hard to fulfill.

In general, users have to manage a large number of accounts and have to pass an authentication procedure on these accounts each time they want to have access. However, most of the users are incapable or reluctant to memorize a large number of strong passwords. Hence, they use weak, easy to guess passwords, or even the very same password on all the accounts, an insecure practice which is widely discouraged.

Thus, according to a first aspect, the invention provides a method for authenticating a user, said method being characterized in comprising the followings steps implemented by a processor:

- in a training phase, presenting a user with a plurality of images called primed images and drawn randomly from a database containing images

- in an authentication phase, presenting said user with a plurality of degraded versions of at least a subset of said primed images and with a plurality of degraded versions of non primed images extracted from said memory;

- receiving from said user respective identifications of said presented degraded primed images and presented non primed images;

- determining a global score based upon said received identifications; and

- authenticating said user based upon the determined global score.

The first aspect of the invention thus provides a method to authenticate a user by means of implicit memory that enables to increase the performance and security of the authentication compared to usual procedures that are generally based on passwords.

In embodiments, the method for authenticating a user according to the invention includes one or several of the following features:

- degraded version of an image is the Mooney image of said image;

- the method includes the steps of :

  - determining, based upon at least identification received for a presented image, if said presented image has been correctly or incorrectly identified by the user; and

  - assigning to a presented image of index i an image score equal to s(i), wherein the value of s(i) if the presented image is a correctly identified primed image is calculated as a function of $p_i$, and the value of s(i) if the presented image is an incorrectly identified non primed image is a function of $n_i$, wherein $p_i$ is the probability for the image of index i to be correctly identified when primed, and $n_i$ is the probability for the image of index i to be correctly identified when non primed ; and

  - calculating the global score as a function of the sum of the image score for the presented images;

- the value of s(i) if the presented image is a correctly identified primed image is calculated as a function of $\log(p_i)$, and the value of s(i) if the presented image is an incorrectly identified non primed image is a function of $\log(1-n_i)$;

- the value of s(i) if the presented image is an incorrectly identified primed image is calculated as a function of $p_i$, and the value of s(i) if the presented image is an correctly identified non primed image is a function of $n_i$;

- the value of s(i) if the presented image is an incorrectly identified primed image is calculated as a function of $\log(1-p_i)$, and the value of s(i) if the presented image is a correctly identified non primed image is a function of $\log(n_i)$;

- the determination of the correctness of the identification received for a presented image is further a function of the evaluation of the time needed by the user for providing the identification;

- the images are presented if $p_i - n_i > 0,5$.

According to a second aspect, the invention provides a computer program product comprising one or more stored sequences of instructions that are accessible to a processor and which, when executed by the processor, cause the processor to perform the steps of a method according to the first aspect of the invention.

According to a third aspect, the invention provides a system for authenticating a user, including a database containing images, said system being characterized in that said system is adapted for, in a training phase, presenting a user with a plurality of images called primed images and drawn randomly from the database, and is adapted for, in an authentication phase, presenting said user with a plurality of degraded versions of at least a subset of said primed images and with a plurality of degraded versions of non primed images extracted from said memory ;
the system being adapted for receiving from said user respective identifications of said presented degraded primed images and presented non primed images, for determining a global score based upon said received identifications; and for authenticating said user based upon the determined global score.

The present invention is illustrated by way of example, and not by way of limitation, in the figures of the accompanying drawings in which:

- Figure 1 shows a view of a network environment 1 in an embodiment of the invention;
- Figure 2 is a flow chart illustrating steps of a method according to an embodiment of the invention;
- Figure 3 is a view of a Mooney image;
- Figure 4 is a view of an image from which the Mooney image of Figure 3 has been computed;
- Figure 5 is a view of a Mooney image;
- Figure 6 is an image from which the Mooney image of Figure 5 has been computed.

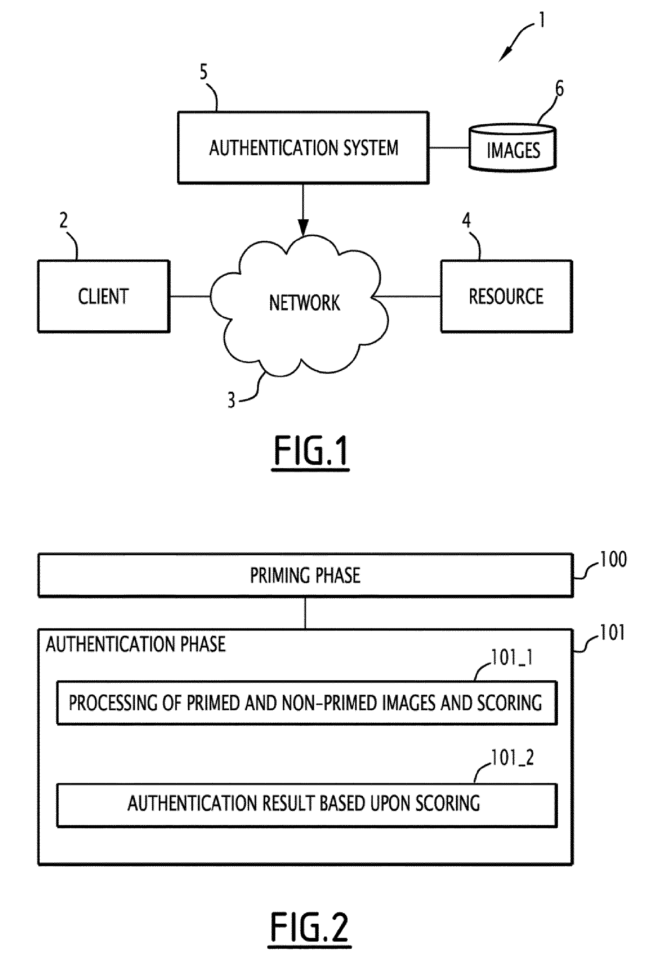

Figure 1 shows a network environment 1 in an embodiment of the invention.

The network environment 1 includes for example client terminals 2 (only one client terminal is shown on figure 1 for the sake of clarity of Figure 1), an authentication system 5 associated to a database 6, a resource 4 and a telecommunication network 3 (for example the internet network) interconnecting client terminals 2, authentication system 5 and the resource 4.

Terminal client 2 includes for example personal computers, smart phones, etc.

The authentication system 5 includes for example a server.

The resource 4 is protected, meaning the access to the resource by a user through a terminal client 2 is provided only after the authentication system 5 has successfully authenticated a user having required access to the resource 4.

The image database 6 stores original images.

Said database 6 stores also associated to each original image, a degraded version of the original image.

The degradation applied is such that the content of the original image, for example an object, is hard to recognize by a user watching the corresponding degraded image when a user did not previously see the original image: in the degraded image, the object thus becomes a "hidden" object.

The database 6 stores a list of predefined labels. Each degraded image is associated to at least one predefined label. A predefined label identifies the "hidden" object in the degraded image and the same object in the associated original image.

A suitable degraded image is an image that is hard to recognize without a previous explicit presentation of the original image. However, if the original image is "primed", i.e. previously shown to a user during the registration phase, recognizing the object from the degraded version becomes easy and the user will be able to correctly identify and label the "hidden" object. In some cases the hidden object in the degraded image can be recognizable by a non-primed user (i.e., a user who has not seen the original image before) as well. However, a primed user (i.e., a user who has seen the original image before) and a non-primed user may be distinguished by their recognition times (the time period necessary for a user to label the image during authentication). Indeed, when the original image was not presented in the priming session users' recognition times will be longer, i.e., users will be slower than when users were primed.

In the considered embodiment, the degraded versions of the original images are Mooney images.

A Mooney image is a thresholded, two-tone image that usually contains a single hidden object. This object is hard to recognize when a user did not previously see the original image. However, if the user has been previously primed, i.e., has been presented with the original image, or was given a hint what the hidden object could be, the users recognition is accelerated. Contrary, when the image is displayed long enough a user may recognize the hidden object without prior knowledge or exposure to the original image.

Mooney images are disclosed for example in Fatma Imamoglu, Thorsten Kahnt, Christof Koch, and John-Dylan Haynes, "Changes in functional connectivity support conscious object recognition", NeuroImage, 63(4):1909-1917, December 2012.

In an embodiment, the original images and the corresponding Mooney images were obtained automatically using a custom made program according to the following steps.

First, concrete words were selected from a linguistic database. Using these words as search words, images were automatically downloaded from an online image database.

Second, the images were converted to grayscale and were smoothed using a 2D smooth operation with a Gaussian kernel ($\sigma$ = 2 pixels and full width at half maximum (FWHM) = 5 pixels). Third, images were resized to have a size of 350 x 350 pixels (subsampled with a scale factor = new size/old size). Lastly, the smoothed and resized images were thresholded using a histogram based thresholding algorithm to generate the Mooney images (see for example in N Otsu, "A threshold selection method from gray-level histograms" IEEE Transactions on Systems, Man and Cybernetics, 9(1):62-66, 1979). Otsu's thresholding method assumes that each image has two classes of pixel properties: a foreground and a background. For each possible threshold the algorithm iteratively computes the separability of the two classes and converges when the maximum separability is reached.

Subsequently, a selection of suitable Mooney images took place, for example 120 images.

Then the obtained original images and corresponding Mooney images are stored in the image database 6.

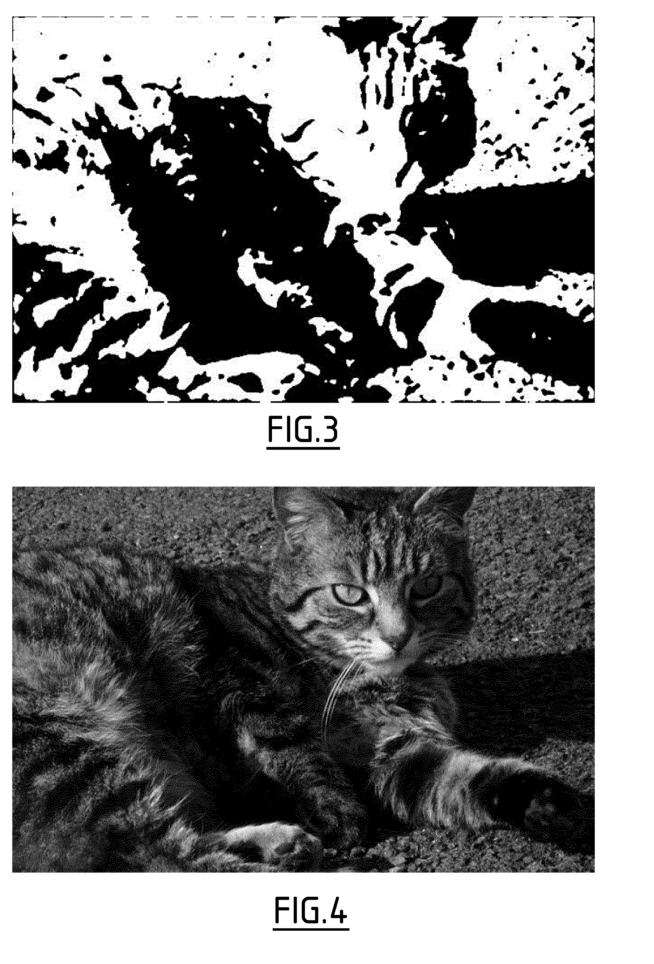

Figure 4 is a view of an original image stored in the database 6 and figure 3 is a view of the Mooney image obtained from original image of Figure 3. The associated label in the list of predefined labels is for example "cat".

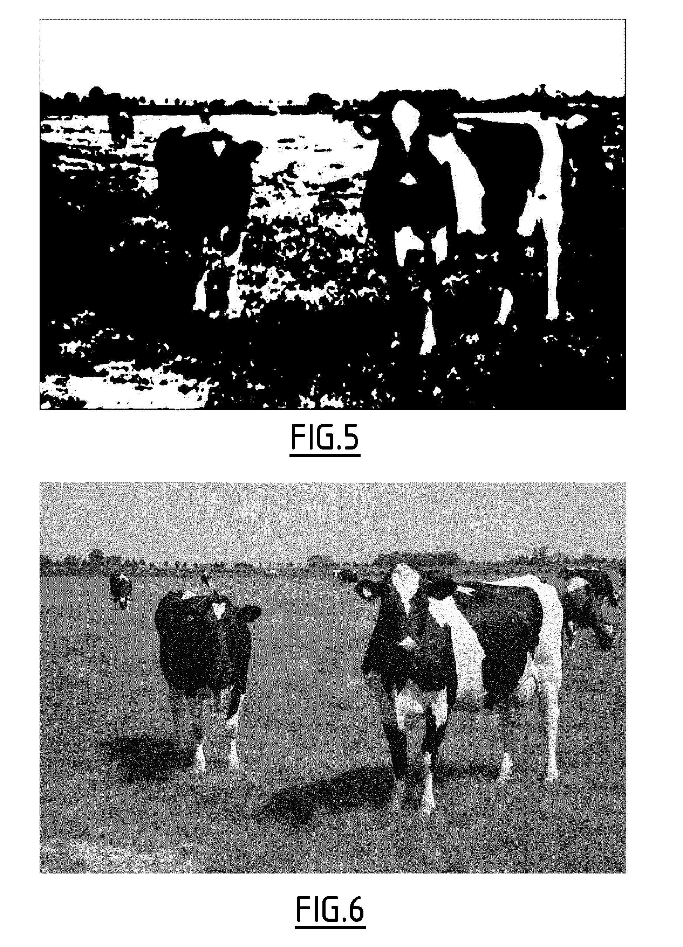

Figure 6 is a view of an original image stored in the database 6 and Figure 5 is a view of the Mooney image obtained from original image of Figure 6. The associated label in the list of predefined labels is for example "cow".

As set here above, selecting and remembering secure passwords puts a high cognitive burden on the user.

Authentication schemes based on implicit memory relieve the user of the burden of actively remembering a secret (such as a complicated password).

According to the invention, implicit memory can be used to link a piece of information, such as a name or label, with another one, such as an object, without user's direct conscious involvement. This link constitutes the secret used for authentication.

In a registration phase of such an authentication scheme a user gets "primed" on specific information that serves as the authentication secret, so the user does not need to actively remember the secret.

In an authentication phase, the user has to carry out a task which he can perform correctly if and only if he was previously primed on the specific information.

In an embodiment, the authentication system 5 is adapted for implementing the steps described hereabove in reference to Figure 2.

When a new user is enrolled, in a preliminary phase 100 of registration, called also priming phase, the new user sends his enrollment request from his client terminal 2 to the authentication server 5 through the network 3.

The authentication system 5 then first assigns two disjoint subsets $I_P$, $I_N$ of Mooney images stored in the database 6 (in the considered embodiment, the subset $I_P$ includes a number $k_P$ of images and the subset $I_N$ include a number $k_N$ of images) to the user identified by a user identifier.

The authentication system 5 then "primes", i.e. trains, the user based upon subset $I_P$: each Mooney image in $I_P$, then the corresponding original image and a label that describes the object in the image is shown to the user. For example, they are sent by the authentication system 5 and presented to the user on the screen of his client terminal 1.

This training creates for the user, implicitly, an association between the original image, the correct label of the image, and the corresponding Mooney image. For example the label presented for images in Figures 3, 4 is "cat", and the label for images in Figures 5, 6 is "cow".

Later, each time the user requires access to resource 4 through his client terminal 2, a phase 101 of authentication is performed by the authentication system 5.

In a step 101_1, the two subsets $I_P$, $I_N$ (or subsets of $I_P$, $I_N$) assigned to this user in the preliminary priming phase, are retrieved from the database 6, for example based upon the user identifier provided by the user in his request for access to resource 4.

$I_P$ corresponds to the primed images; $I_N$ corresponds to the non-primed images. The correspondence between the user and the images of the assigned subsets $I_P$, $I_N$ is then stored in the database.

The primed and non-primed Mooney images of the two retrieved subsets $I_P$, $I_N$ ($I_P \cup I_N$) are then presented to the user in a pseudo-randomized order. For each Mooney image presentation, the user is requested to type in via his client terminal 2, the label of the object that the image contains, or skip the image if he is not able to recognize any object.

An alternative solution is to display each Mooney image with a list of labels. The user is then requested to select the label corresponding to the object he recognizes.

The typed label and an identifier of the Mooney image for which the label was typed (or selected) are transmitted via the network 3 from the client terminal 2 to the authentication system 5.

Two metrics are then computed for each presented image by the authentication system 5:

(i) the metric of correctness of the label is computed by comparing the typed label for each presented Mooney image to the label(s) associated with this presented image in the list of labels stored in the database 6, and by computing a distance value between the typed label and the list defined label using a distance metric that measures how similar the label provided by the user matched the defined labels. If the distance value is higher than a given distance threshold or if no label has been typed by the user, the metric of correctness of the label returns a value "incorrect" ;
(ii) the recognition time, representing the time for the user to recognize the hidden object (for example estimated by the time between displaying the Mooney image on the screen of the user client terminal 2 and the first keystroke) is recorded. In some cases, Mooney images could be labeled correctly even though they were not primed previously. This can happen when users look at the displayed Mooney image long enough and start to find associated patterns in the image that suggests a hint to the hidden object. Therefore, if the recognition time is longer than a given duration, for example approximately 20 seconds, the typed label is counted as "incorrect".

A typed label or the absence of the typed label is considered as "incorrect" if at least one of these metrics (i), (ii) returns "incorrect".

Authentication is based on the hypothesis that the user labels the primed images correctly more often (and faster) than those Mooney images he was not primed on. However, this effect is not perfect, so sometimes primed images will be labeled incorrectly and vice-versa.

To tolerate some of these errors, a score is then computed from the set of correct and incorrect labels provided by the user during the presentation of the Mooney images in $I_P$ and $I_N$.

In the step 101_2, the authentication system 5 compares the score to a specific scoring threshold, and determines as a function of the comparison that:

- the authentication of the user succeeds (for example if the score is greater than the scoring threshold) and then authorizes the access by the user to the resource 4 ; or else
- the authentication of the user fails (for example if the score is less than the scoring threshold) ; and denies the access by the user to the resource 4.

There are several possibilities for an authentication system 5 to perform this scoring, as described in the following.

Considering that each Mooney image in the subsets $I_P$, $I_N$ is indexed with a respective index i (i = 1 to $k_P + k_N$ in the specific detailed embodiment), there are four possible events to be considered:

- the image I was/was not primed for the user (i.e., it is in $I_P$ or in $I_N$), and
- the user can provide a correct or an incorrect label for the image.

The probability (for a random user) that a user correctly labels a primed image is denoted with $p_i$, and the probability that a user correctly labels a non-primed image is denoted with $n_i$.

$p_i$ is expected to be larger than $n_i$, and the difference is denoted with $d_i := p_i - n_i$. Positive $d_i$'s indicate that priming is working for this image, and reasonable images should have $d_i > 0.5$.

In a scoring method, the four basic events that can occur for a single image are considered:

- a primed image (with index i) is labeled correctly: occurs with probability $p_i$, and gets score $s_{p,c} = A$ ;
- a primed image (with index i) is labeled incorrectly: occurs with prob. $1 - p_i$, gets score $s_{p,f} = B$ ;
- a non-primed image (with index i) is labeled correctly: occurs with prob. $n_i$, gets score $s_{n,c} = C$ ;
- a non-primed image (with index i) is labeled incorrectly: occurs with prob. $1 - n_i$, gets score $s_{n,f} = D$.

In step 101_1 the global score for all the presented Mooney images is determined by the authentication as a function of the sum of the scores each assigned to a respective presented Mooney image.

A such first scoring method, referenced herebelow as static scoring, assigns for example, the two "good" events a constant value, of 1 i.e., $s_{p,c} = 1$, $s_{n,f} = 1$, and of 0 to the two bad events $s_{p,f} = 0$, $s_{n,c} = 0$.

Static scoring does not differentiate between different probability values, which looses information.

Indeed, consider the event E* that the user wrongly labels a primed image. Let us fix a difference $d_i = p_i - n_i = 0.5$, and first consider the case where $p_i = 0.5$ (and thus $n_i = 0$), i.e., that the primed image is labeled correct and incorrectly with the same probability. Then the event E* does carry little information, as it is a plausible outcome for a legitimate user.

Secondly, let us consider the case where $p_i = 1$ (and thus $n_i = 0.5$), then every primed image will be labeled correctly by the legitimate (primed) user. Thus, if event E* happens, we can be certain that it's not the legitimate user participating in the protocol.

The present invention thus proposes alternative scorings, referenced as dynamic scorings, related to a notion of self-information denoting the information content associated with a single event, as opposed to entropy which is a property of an entire distribution. The self-information $I(E_*)$ of an event $E_*$ with probability $p_i$ is defined as $I(E_*) = -\log(p_i)$, where log (.) is the logarithms for example to base 2.

In an embodiment, for an image of index i, $s_{p,c}$ and $s_{n,f}$ get distinct respective values (i.e. $s_{p,c} \neq s_{n,f}$), the value of $s_{p,c}$ being a function of $p_i$ whereas the value of $s_{n,f}$ is a function of $n_i$.

In an embodiment, for an image of index i, $s_{p,f}$ and $s_{n,c}$ get distinct respective values (i.e. $s_{p,f} \neq s_{n,c}$), the value of $s_{p,f}$ being a function of $p_i$ whereas the value of $s_{n,c}$ is a function of $n_i$.

In an embodiment, score $s_{p,c}$ is a function of $\log(p_i)$, $s_{p,f}$ is a function of $\log(1-pi)$, $s_{n,c}$ is a function of $\log(n_i)$, $s_{n,f}$ is a function of $\log(1- n_i)$.

In a specific embodiment, score $s_{p,c} = \log(p_i)$, $s_{p,f} = \log(1-pi)$, $s_{n,c} = \log(n_i)$, $s_{n,f} = \log(1- n_i)$. Consequently, the scores are negative. The authentication is thus successful only if the sum of the image scores is less than a negative threshold.

When a authentication system 5 uses such alternative scorings, the probabilities $p_i$, $n_i$ have to be calculated in a preliminary step for each of the Mooney images of the database 6.

Thus for the legitimate user, the expected value, $E(S_i)$, of the score $S_i$ for a single image with index i

equals $E(S_i) = \dfrac{1}{2}\left(p_i \cdot \log(p_i) + (1-p_i)\cdot\log(1-p_i)\right) + \dfrac{1}{2}\cdot\left(n_i \cdot \log(n_i) + (1-n_i)\cdot\log(1-n_i)\right)$, which equals the average of the Shannon entropies of Bernoulli-distributed random variables $B1,p_i$ and $B1,n_i$ with mean $p_i$ and $n_i$, respectively, $E(S_i) = \dfrac{1}{2}\left(H(B1,p_i) + H(B1,ni)\right)$, where H(X) denotes the Shannon entropy, which is the expected value of the self-information $H(X) = E[I(X)]$.

An authentication scheme according to the invention provides for an improved authentication.

Moreover the embodiment using Mooney images improves security and authentication usability.

The embodiment using a dynamic scoring provides for better discriminatory properties than the static scoring (as evaluated for example by the false-accept rate indicator (FAR) of the security, that gives the likelihood that an impostor is (falsely) classified as legitimate user, i.e., "accepted") and thus provides for a better security of the authentication scheme.

An embodiment of the invention has been described hereabove using Mooney images as degraded images. Of course, degraded images of other types are usable for performing an authentication scheme according to the invention, for example other types of degraded images such as Snodgrass images or masked sound <Percept Mot Skills. 1988 Aug;67(1):3-36.Perceptual identification thresholds for 150 fragmented pictures from the Snodgrass and Vanderwart picture set.Snodgrass JG1, Corwin J.

In an embodiment, the authentication scheme according to the invention is used as fallback authentication. In general, as a first authentication step after a user requests access to a protected resource a password is required.

This first authentication step may fail:

(i) when the user forgets a password and selects a field named «forgotten password », or

(ii) when the password typed by the user does not match the user's password stored in the authentication system server.

Then as a second authentication step, a fallback authentication step takes place, similar to phase 101 of a method according to the invention (this embodiment requires that the user, in a previous step wherein an authentication step based upon password succeeded, registered and achieved a registration phase similar to the priming phase 100 described hereabove).

The present invention can be implemented in hardware, software, or a combination of hardware and software. Any processor, controller, or other apparatus adapted for carrying out the functionality described herein is suitable. A typical combination of hardware and software could include a general purpose microprocessor (or controller) with a computer program that, when loaded and executed, carries out the functionality described herein.

The present invention can also be embedded in a computer program product, which comprises all the features enabling the implementation of the method described herein, and which - when loaded in an information processing system - is able to carry out this method.

A person skilled in the art will readily appreciate that various parameters disclosed in the description may be modified and that various embodiments disclosed and/or claimed may be combined without departing from the scope of the invention.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

**Claims**

1.  Method for authenticating a user, said method being **characterized in** comprising the followings steps implemented by a processor (5):

    - in a training phase, presenting a user with a plurality of images called primed images and drawn randomly from a database (6) containing images
    - in an authentication phase, presenting said user with a plurality of degraded versions of at least a subset of said primed images and with a plurality of degraded versions of non primed images extracted from said memory ;
    - receiving from said user respective identifications of said presented degraded primed images and presented non primed images;
    - determining a global score based upon said received identifications; and
    - authenticating said user based upon the determined global score.

2.  Method for authenticating a user according to claim 1, wherein degraded version of an image is the Mooney image of said image.

3.  Method for authenticating a user according to any of claims 1 to 2, including the steps of :

    - determining, based upon at least identification received for a presented image, if said presented image has been correctly or incorrectly identified by the user; and
    - assigning to a presented image of index i an image score equal to $s(i)$, wherein the value of $s(i)$ if the presented image is a correctly identified primed image is calculated as a function of $p_i$, and the value of $s(i)$ if the presented image is an incorrectly identified non primed image is a function of $n_i$, wherein $p_i$ is the probability for the image of index i to be correctly identified when primed, and $n_i$ is the probability for the image of index i to be correctly identified when non primed ; and
    - calculating the global score as a function of the sum of the image score for the presented images.

4.  Method for authenticating a user according to claim 3, wherein the value of $s(i)$ if the presented image is a correctly identified primed image is calculated as a function of $\log(p_i)$, and the value of $s(i)$ if the presented image is an incorrectly identified non primed image is a function of $\log(1-n_i)$.

5.  Method for authenticating a user according to claim 3 or 4, wherein the value of $s(i)$ if the presented image is an incorrectly identified primed image is calculated as a function of $p_i$, and the value of $s(i)$ if the presented image is an correctly identified non primed image is a function of $n_i$.

6.  Method for authenticating a user according to claim 5, wherein the value of $s(i)$ if the presented image is an incorrectly identified primed image is calculated as a function of $\log(1-p_i)$, and the value of $s(i)$ if the presented image is a correctly identified non primed image is a function of $\log(n_i)$.

7.  Method for authenticating a user according to any of claims 3 to 6, wherein the determination of the correctness of the identification received for a presented image is further a function of the evaluation of the time needed by the user for providing the identification.

8.  Method for authenticating a user according to any of claims 3 to 7, wherein the images of index i are presented if $p_i - n_i > 0,5$ .

9.  A computer program product comprising one or more stored sequences of instructions that are accessible to a processor and which, when executed by the processor, cause the processor to perform the steps of any of Claims 1 to 8.

10. System for authenticating a user, including a database (6) containing images, said system being **characterized in**

**that** said system is adapted for, in a training phase, presenting a user with a plurality of images called primed images and drawn randomly from the database, and is adapted for, in an authentication phase, presenting said user with a plurality of degraded versions of at least a subset of said primed images and with a plurality of degraded versions of non primed images extracted from said memory ;

the system being adapted for receiving from said user respective identifications of said presented degraded primed images and presented non primed images, for determining a global score based upon said received identifications; and for authenticating said user based upon the determined global score.

11. System for authenticating a user according to claim 1, wherein degraded version of an image is the Mooney image of said image.

12. System for authenticating a user according to any of claims 10 to 11, adapted for determining, based upon at least identification received for a presented image, if said presented image has been correctly or incorrectly identified by the user and for assigning to a presented image of index i an image score equal to s(i), wherein the value of s(i) if the presented image is a correctly identified primed image is calculated as a function of $p_i$, and the value of s(i) if the presented image is an incorrectly identified non primed image is a function of $n_i$ , wherein $p_i$ is the probability for the image of index i to be correctly identified when primed, and $n_i$ is the probability for the image of index i to be correctly identified when non primed ; and said system being adapted for calculating the global score as a function of the sum of the image score for the presented images.

13. System for authenticating a user according to claim 12, wherein the value of s(i) if the presented image is a correctly identified primed image is calculated as a function of $\log(p_i)$, and the value of s(i) if the presented image is an incorrectly identified non primed image is a function of $\log(1-n_i)$.

14. System for authenticating a user according to claim 12 or 13, wherein the value of s(i) if the presented image is an incorrectly identified primed image is calculated as a function of $p_i$, and the value of s(i) if the presented image is an correctly identified non primed image is a function of $n_i$.

15. System for authenticating a user according to claim 14, wherein the value of s(i) if the presented image is an incorrectly identified primed image is calculated as a function of $\log(1-p_i)$, and the value of s(i) if the presented image is a correctly identified non primed image is a function of $\log(n_i)$.

16. System for authenticating a user according to any of claims 12 to 15, adapted for determining the correctness of the identification received for a presented image as a function of the evaluation of the time needed by the user for providing the identification.

17. System for authenticating a user according to any of claims 12 to 16, adapted for presenting images of index i if $p_i - n_i > 0,5$ .

## FIG.1

## FIG.2

FIG.3

FIG.4

FIG.5

FIG.6

Europäisches
Patentamt

European
Patent Office

Office européen
des brevets

# EUROPEAN SEARCH REPORT

Application Number

EP 14 30 5941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/094717 A1 (SRINIVASAN SUDHARSHAN [US] ET AL) 26 April 2007 (2007-04-26) * paragraph [0081] - paragraph [0132]; claims 1-8; figures 3, 4 * ----- | 1-17 | INV. G06F21/36 |

TECHNICAL FIELDS
SEARCHED    (IPC)

G06F

The present search report has been drawn up for all claims

| Place of search | Date of completion of the search | Examiner |
|---|---|---|
| Munich | 26 November 2014 | Savvides, George |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 30 5941

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2014

| Patent document cited in search report | Publication date | Patent family member(s) | Publication date |
|---|---|---|---|
| US 2007094717 A1 | 26-04-2007 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FATMA IMAMOGLU ; THORSTEN KAHNT ; CHRISTOF KOCH ; JOHN-DYLAN HAYNES.** Changes in functional connectivity support conscious object recognition. *NeuroImage,* December 2012, vol. 63 (4), 1909-1917

- **N OTSU.** A threshold selection method from gray-level histograms. *IEEE Transactions on Systems, Man and Cybernetics,* 1979, vol. 9 (1), 62-66
- **CORWIN J.** Perceptual identification thresholds for 150 fragmented pictures from the Snodgrass and Vanderwart picture set.Snodgrass JG1. *Percept Mot Skills,* August 1988, vol. 67 (1), 3-36